# EUROPÄISCHE PATENTSCHRIFT

(11) **EP 0 846 310 B1**
(45) Veröffentlichungstag und Bekanntmachung des Hinweises auf die Patenterteilung: **04.06.2003**
(21) Anmeldenummer: 97930382.3
(22) Anmeldetag: 23.06.1997
(51) Int. Cl.: G07D 7/00

(54) **VERFAHREN UND VORRICHTUNG ZUR MESSUNG MAGNETISCHER EIGENSCHAFTEN VON BLATTGUT**
METHOD AND DEVICE FOR MEASURING THE MAGNETIC PROPERTIES OF SHEET MATERIALS
PROCEDE ET DISPOSITIF POUR MESURER DES PROPRIETES MAGNETIQUES DE MATERIAUX SOUS FORME DE FEUILLES

(30) Priorität: 24.06.1996 DE 19625224
(43) Veröffentlichungstag der Anmeldung: 10.06.1998
(73) Patentinhaber: Giesecke & Devrient GmbH, 81677 München (DE)
(72) Erfinder: STEIN, Dieter, D-83607 Holzkirchen (DE); SCHÜTT, Lothar, D-85221 Dachau (DE)
(74) Vertreter: Klunker . Schmitt-Nilson . Hirsch
(86) Internationale Anmeldenummer: EP9703280
(87) Internationale Veröffentlichungsnummer: WO97050061

(56) Entgegenhaltungen:
- CH-A- 672 193
- DE-A- 3 408 086
- DE-A- 4 022 739
- DE-A- 4 405 860
- GB-A- 2 098 768
- GB-A- 2 227 093

## Beschreibung

Die Erfindung betrifft ein Verfahren und eine Vorrichtung zur Messung magnetischer Eigenschaften von Blattgut, wie z. B. Banknoten, gemäß dem Oberbegriff des Anspruchs 1 bzw. 18.

Eine solche Vorrichtung ist aus der DE 40 22 739 bekannt. Die Vorrichtung weist mindestens einen Meßkopf mit mindestens zwei Polschuhen auf, die so angeordnet sind, daß sie einen Meßspalt bilden. Die von den magnetischen Eigenschaften des Blattguts am Meßspalt erzeugten magnetischen Signale werden von einem Detektor an mindestens einem der Polschuhe in elektrische Signale umgewandelt.

Um speziell magnetische Partikel mit geringer Remanenz ausreichend zuverlässig detektieren zu können, wird ein Polschuh aus permanentmagnetischem Material und der andere Polschuh aus weichmagnetischem Material gebildet. Das von dem Material des permanentmagnetischen Polschuhs erzeugte Magnetfeld wird so groß gewählt, daß das weichmagnetische Material des anderen Polschuhs einen geeigneten magnetischen Arbeitspunkt aufweist. Durch diese Maßnahme wird erreicht, daß selbst geringe magnetische Signale am Meßspalt ein genügend großes elektrisches Signal am Detektor erzeugen.

Speziell Banknoten weisen im Bereich des Druckbildes im allgemeinen geringe und z.B. im Bereich des Sicherheitsfadens hohe magnetische Partikeldichten auf, so daß bei der Messung von Banknoten am Detektor elektrische Signale mit geringen bzw. hohen Amplituden entstehen.

Die Aufgabe der Erfindung besteht darin, ein Verfahren zur Messung magnetischer Eigenschaften von Blattgut vorzuschlagen, das sowohl bei geringer als auch bei hoher magnetischer Partikeldichte zuverlässige Signale liefert.

Die Aufgabe wird erfindungsgemäß durch die im kennzeichnenden Teil des Hauptanspruchs angegebenen Merkmale gelöst.

Der Grundgedanke der Erfindung besteht im wesentlichen darin, die vom Detektor eines Meßkopfes erzeugten elektrischen Signale in einem bestimmten Signalbereich so zu verstärken, daß die von den Bereichen geringer magnetischer Partikeldichte erzeugten elektrischen Signale mit geringerer Amplitude stärker verstärkt werden als die von den Bereichen hoher magnetischer Partikeldichte erzeugten elektrischen Signale mit höherer Amplitude. Hierzu wird der Signalbereich wenigstens in zwei Signalbereiche aufgeteilt, die jeweils konstant verstärkt werden. Die Verstärkung in dem Bereich für Signale geringerer Amplitude ist hierbei größer als im angrenzenden Signalbereich.

Bevorzugt wird der Signalbereich jedoch in wenigstens drei Bereiche aufgeteilt, die jeweils konstant verstärkt werden. Die Verstärkung in den beiden äußeren Bereichen wird gleich groß und die Verstärkung im mittleren Bereich größer als die Verstärkung in den äußeren Bereichen gewählt. Bevorzugt wird das elektrische Signal vor der Verstärkung um einen konstanten Wert verschoben, so daß der Nullpunkt des Signalbereichs in der Mitte des mittleren Bereichs liegt.

Ein Vorteil des Verfahrens ist es, daß sich die von den Bereichen geringer Partikeldichte erzeugten elektrischen Signale mit geringer Amplitude im mittleren Bereich des Signalbereichs befinden und stark verstärkt werden, während die von den Bereichen hoher Partikeldichte erzeugten elektrischen Signale mit hoher Amplitude in die beiden äußeren Bereiche des Signalbereichs fallen und geringer verstärkt werden als die elektrischen Signale mit geringer Amplitude. Die Amplituden der elektrischen Signale am Verstärkerausgang werden somit gleichmäßiger über den Ausgangsbereich des Verstärkers verteilt und können dann beispielsweise von einem nachgeordneten Analog-Digitalwandler optimal verarbeitet werden. Durch eine geeignete Verschiebung des elektrischen Signals des Detektors können sowohl positive als auch negative Amplituden verstärkt werden.

In einer Vorrichtung zur Durchführung des Verfahrens zur Messung magnetischer Eigenschaften von Blattgut kann beispielsweise zur Umwandlung der magnetischen Eigenschaften des Blattguts in elektrische Signale ein aus der DE 40 22 739 bekannter Meßkopf verwendet werden.

Eine bevorzugte Ausführungsform einer Vorrichtung zur Durchführung des Verfahrens weist mindestens einen Meßkopf mit mindestens zwei Polschuhen auf, die magnetisch entkoppelt sind, je einen Detektor und vorzugsweise weichmagnetisches Material aufweisen. Weiterhin sind Mittel zur Erzeugung eines zeitlich konstanten und senkrecht zur Detektorebene stehenden Magnetfelds vorgesehen, wobei die Stärke des Magnetfelds an jedem Detektor unterschiedlich ist. Vorzugsweise wird die Stärke des zeitlich konstanten Magnetfelds so gewählt, daß das weichmagnetische Material eines Polschuhs einen geeigneten magnetischen Arbeitspunkt aufweist.

Ein Vorteil der bevorzugten Ausführungsform ist es, daß aufgrund des asymmetrisch aufgebauten Meßkopfes die von den Detektoren erzeugten und verstärkten Signale bei der Messung von weichmagnetischen Partikeln mit geringer Remanenz und hartmagnetischen Partikeln mit hoher Remanenz jeweils unterschiedliche Symmetrien aufweisen. Hierdurch läßt sich unterscheiden, ob es sich bei der Messung um Partikel geringer oder hoher Remanenz handelt.

In einer weiteren Ausführungsform werden im Meßspalt des Meßkopfes Mittel zur Erzeugung eines definierten, zeitlich veränderlichen, magnetischen Signals vorgesehen. Bevorzugt wird hier ein elektrischer Leiter vorgesehen, durch den ein definiertes, zeitlich veränderliches, elektrisches Signal geleitet wird.

Anhand der am Verstärkerausgang gemessenen elektrischen Signale kann nun beispielsweise die Verstärkung des Verstärkers so geändert werden, daß die am Verstärkerausgang gemessenen elektrischen Signale auf einen bestimmten Wert angepaßt werden. Alternativ kann auch eine Anpassung der am Verstärkerausgang gemessenen elektrischen Signale auf einen bestimmten Wert durch eine geeignete Normierung der elektrischen Signale erreicht werden. Durch diese Vorgehensweise können unerwünschte Änderungen der Verstärkung beseitigt werden, die z.B. durch Temperatureinfluß oder aber auch durch Abnutzung des Meßkopfes entstehen.

Durch die Anordnung mehrerer Meßköpfe in einem Array können gleichzeitig mehrere Spuren des Blattguts gemessen werden.

Weitere Vorteile und Weiterbildungen der Erfindung ergeben sich aus den Unteransprüchen sowie aus der nachfolgenden Beschreibung anhand der Figuren. Darin zeigen
- Fig. 1: Prinzipskizze der bevorzugten Ausführungsform der Erfindung,
- Fig. 2: schematische Darstellung einer erfindungsgemäßen Vorrichtung,
- Fig. 3: Kennlinie der Verstärkerstufe,
- Fig. 4: schematische Darstellung der verstärkten elektrischen Signale,
- Fig. 5: Prinzipskizze einer Messung hartmagnetischer bzw. weichmagnetischer Partikel,
- Fig. 6: schematische Darstellung der Signalsymmetrie eines hartmagnetischen Bereichs,
- Fig. 7: schematische Darstellung der Signalsymmetrie eines weichmagnetischen Bereichs,
- Fig. 8: Prinzipskizze der elektrischen Signale einer Kalibriereinrichtung.

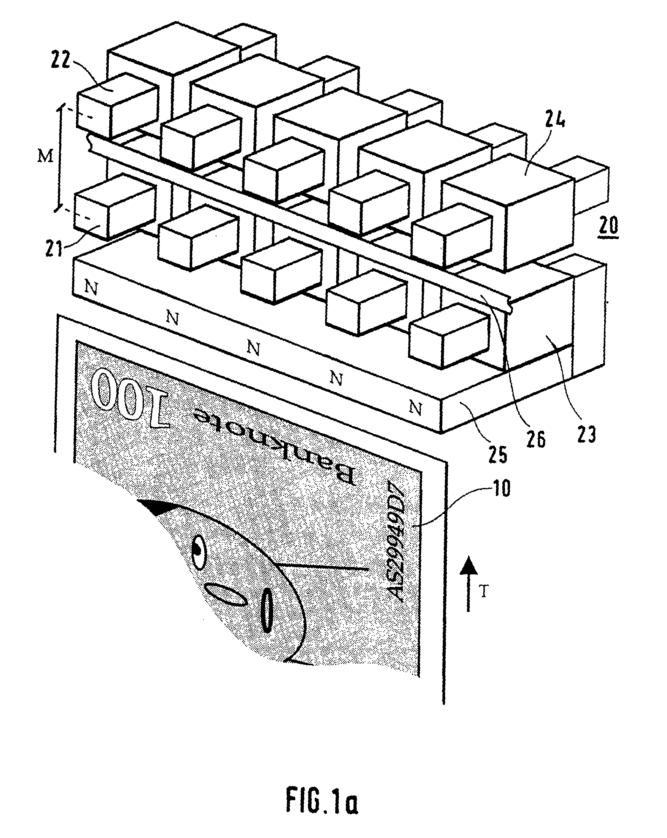

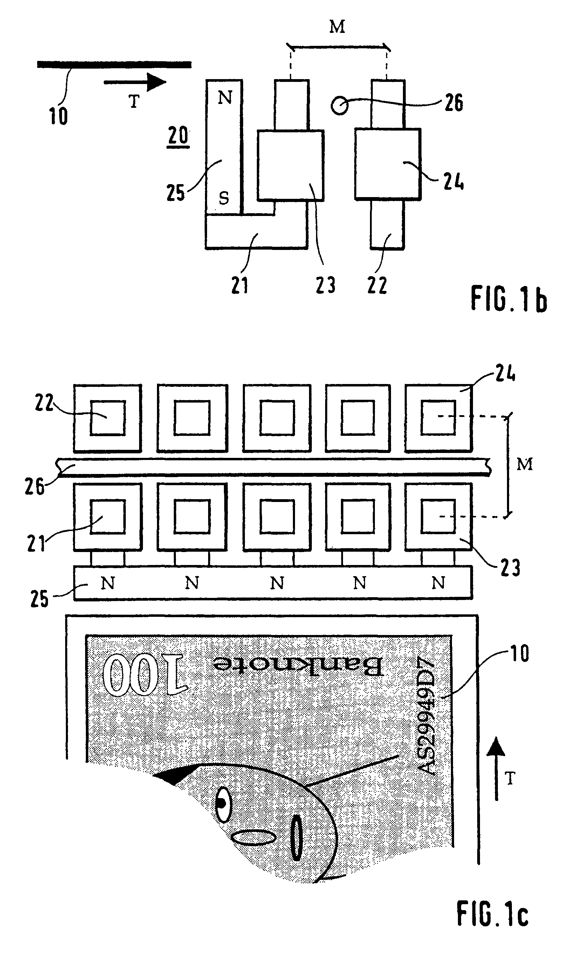

Die Fig. 1 zeigt eine Prinzipskizze der bevorzugten Ausführungsform der Erfindung. Das Blattgut 10 und mehrere als Array angeordnete Meßköpfe 20 sind in der Fig. 1a in einer perspektivischen Darstellung, in Fig. 1b in einer Seitenansicht und in Fig. 1c in einer Aufsicht dargestellt.

Jeder Meßkopf 20 weist zwei Polschuhe 21 und 22 auf, die magnetisch entkoppelt sind und jeweils einen Detektor 23 bzw. 24 aufweisen. Als Detektoren 23 und 24 eignen sich beispielsweise Spulen, Hallsonden oder magnetisch sensitive Widerstände. Zur Erzeugung eines zeitlich konstanten Magnetfelds ist ein Permanentmagnet 25 vorgesehen. Um eine gute Wechselwirkung zwischen dem Permanentmagneten 25 und dem Polschuh 21 zu erreichen, sind diese direkt miteinander verbunden, so daß das vom Permanentmagneten 25 erzeugte Magnetfeld das Material des Polschuhs 21 gut durchdringen kann.

Bevorzugt weisen die Polschuhe 21 und 22 weichmagnetisches Material auf. Die Stärke des Magnetfeldes des Permanentmagneten 25 wird so gewählt, daß das weichmagnetische Material des Polschuhs 21 einen geeigneten magnetischen Arbeitspunkt aufweist.

Durch die magnetische Entkopplung der Polschuhe 21 und 22 ist das Magnetfeld des Permanentmagneten 25 im Polschuh 22 wesentlich geringer als im Polschuh 21, so daß der Polschuh 22 keinen geeigneten magnetischen Arbeitspunkt aufweist. Um diesen Effekt zu verstärken, kann zusätzlich eine hier nicht dargestellte Abschirmung um den Polschuh 22 vorgesehen werden, so daß die Stärke des Magnetfeldes des Permanentmagneten 25 im Polschuh 22 so gering wie möglich ist.

Die Polschuhe 21 und 22 sind so angeordnet, daß sie einen Meßspalt M bilden und magnetische Signale am Meßspalt senkrecht zur Detektorebene des jeweiligen Detektors 23 bzw. 24 übertragen. Die Detektoren 23 bzw. 24 wandeln dann diese magnetischen Signale in elektrische Signale um. Optional kann im Meßspalt M ein elektrischer Leiter 26 zur Erzeugung eines zeitlich veränderlichen, magnetischen Signals vorgesehen werden.

Bevorzugt werden die Detektoren 23 und 24 miteinander verschaltet, so daß jeder Meßkopf 20 lediglich ein elektrisches Signal erzeugt. Durch eine entgegengesetzt gerichtete Verschaltung der Detektoren 23 und 24 können gleichzeitig auf die Polschuhe 21 und 22 wirkende äußere magnetische Einflüsse minimiert werden, da sich die elektischen Signale der Detektoren 23 und 24 bei entgegengesetzt gerichteter Verschaltung im wesentlichen gegeneinander aufheben.

Bei Bedarf können die elektrischen Signale der Detektoren 23 und 24 auch separat aus dem Meßkopf 20 geleitet werden. Zur weiteren Verarbeitung können die Signale dann gegebenenfalls jeweils mit einem separaten Verstärker verstärkt und getrennt weiterverarbeitet werden.

Wie in Fig. 1a und 1c dargestellt, lassen sich mehrere Magnetköpfe als Array anordnen, wobei die Meßspalten der einzelnen Meßköpfe parallel zueinander ausgerichtet sind. Mit einer solchen Anordnung können gleichzeitig mehrere Spuren des Blattguts 10 gemessen werden. Zur Erzeugung des zeitlich konstanten Magnetfeldes kann hier ein einziger entsprechend dimensionierter Permanentmagnet 25 verwendet werden.

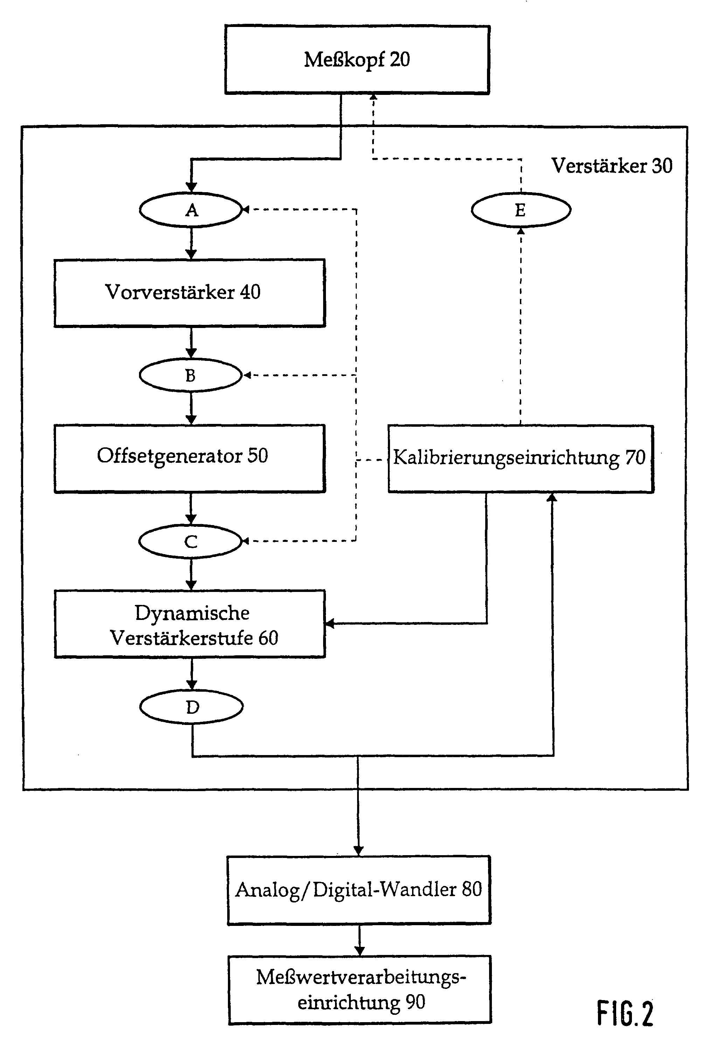

Die Fig. 2 zeigt eine schematische Darstellung einer erfindungsgemäßen Vorrichtung. Neben einem Meßkopf 20, der entweder gemäß dem Stand der Technik oder bevorzugt wie oben beschrieben ausgeführt sein kann, weist die Vorrichtung zusätzlich einen Verstärker 30 auf, der die elektrischen Signale des Meßkopfes 20 verstärkt. Der Verstärker 30 weist einen Vorverstärker 40, einen Offsetgenerator 50, eine dynamische Verstärkerstufe 60 und eine Kalibrierungseinrichtung 70 auf.

Zur Messung der magnetischen Eigenschaften des Blattguts werden nun die magnetischen Eigenschaften des Blattguts zunächst am Meßspalt des Meßkopfes 20 erfaßt und dann von den Detektoren 23 bzw. 24. des Meßkopfs 20 in elektrische Signale eines bestimmten Signalbereichs umgewandelt. Diese elektrischen Signale gelangen dann am Punkt A in den Verstärker 30. Dort werden die elektrischen Signale im allgemeinen zunächst von einem Vorverstärker 40 gleichmäßig verstärkt. Bevorzugt wird das vom Vorverstärker 40 im Punkt B erzeugte elektrische Signal mittels eines Offsetgenerators 50 um einen konstanten Wert verschoben und kann so an die Kennlinie der nachfolgenden dynamischen Verstärkerstufe 60 angepaßt werden.

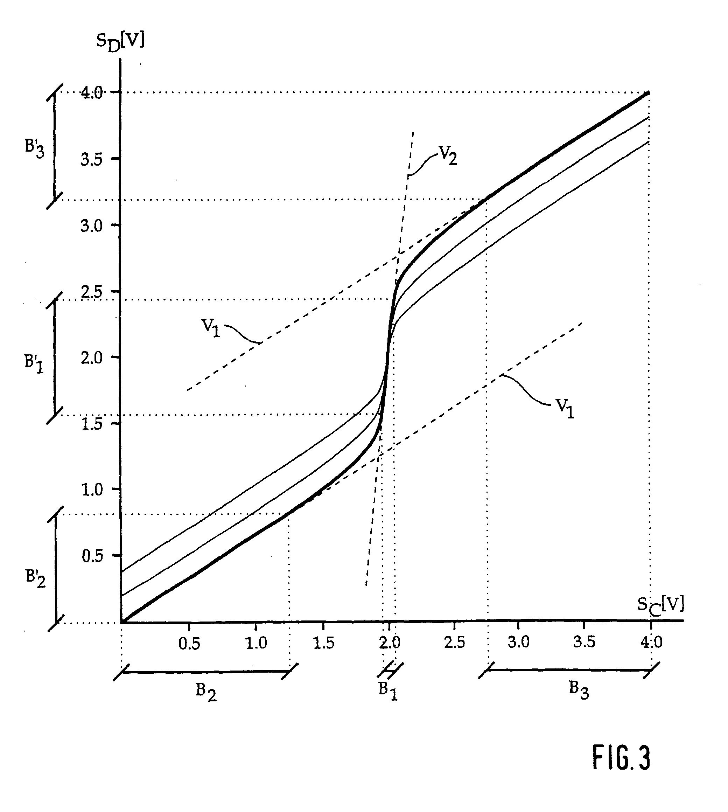

Die Kennlinie der dynamischen Verstärkerstufe 60 ist in Fig. 3 dargestellt. Auf der X-Achse ist die Stärke der elektrischen Signale S_{C} im Punkt C aufgetragen. Auf der Y-Achse ist die Stärke der elektrischen Signale S_{D} nach der dynamischen Verstärkerstufe 60 in Punkt D dargestellt.

Der Signalbereich weist bevorzugt drei Bereiche B₁, B₂ und B₃ mit konstanter Verstärkung V₁ bzw. V₂ auf. In den beiden äußeren Bereichen B₂ und B₃ ist die Verstärkung gleich groß, hier V₁. Im mittleren Bereich B₁ ist die Verstärkung V₂ größer als die Verstärkung V₁ in den äußeren Bereichen B₂ und B₃.

Bei Bedarf kann der Signalbereich auch in mehr als drei Bereiche aufgeteilt werden. Die Verstärkungen werden in symmetrischen Bereichen jeweils gleich gewählt, d.h. die Verstärkung in den beiden äußersten Bereichen, in den beiden zweiten Bereichen von außen usw. ist jeweils gleich, während beispielsweise die Verstärkung im äußersten Bereich gegenüber der im zweiten Bereich von außen verschieden sein kann. Bei einer ungeraden Anzahl von Bereichen kann die Verstärkung des mittleren Bereichs frei gewählt werden.

Die spezielle Kennlinie der dynamischen Verstärkerstufe 60 gewährleistet, daß elektrische Signale mit geringer Amplitude im mittleren Bereich B₁ des Signalbereichs stark verstärkt werden, während die elektrischen Signale mit hoher Amplitude in den beiden äußeren Bereichen B₂ und B₃ des Signalbereichs geringer verstärkt oder bei Bedarf sogar abgeschwächt werden.

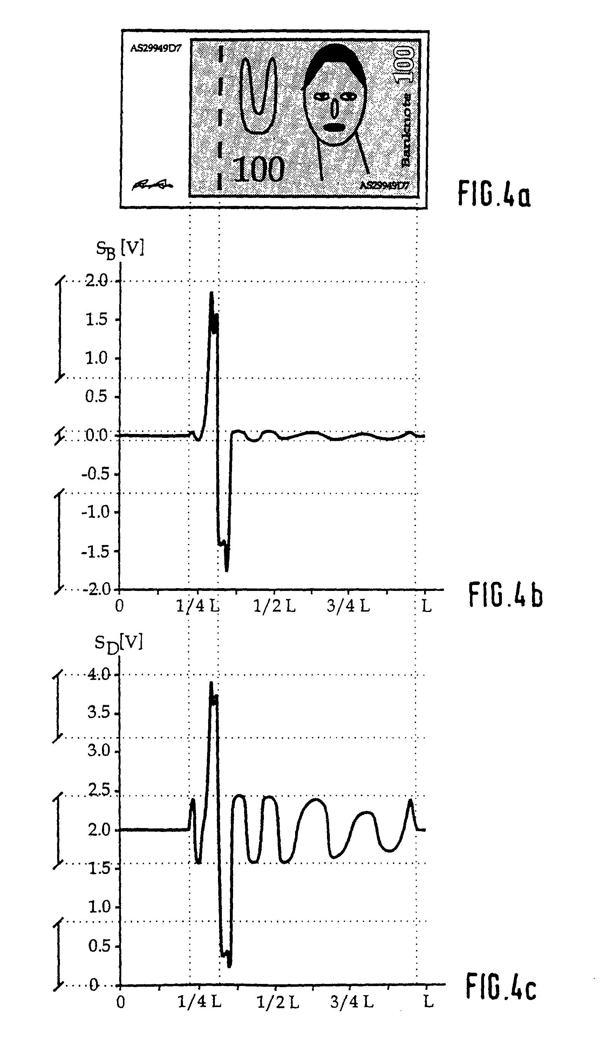

In Fig. 4 sind die verstärkten elektrischen Signale einer Messung eines Blattguts schematisch dargestellt. In Fig. 4a ist beispielsweise als Blattgut eine Banknote dargestellt, die im Bereich des grau dargestellten Druckbildes eine geringe magnetische Partikeldichte aufweist, während die magnetische Partikeldichte im Bereich des strichliert dargestellten Sicherheitsfadens hoch ist. In Fig. 4b ist das von der Banknote erzeugte elektrische Signal im Punkt B des Verstärkers 30 über der Länge L der Banknote dargestellt. Im allgemeinen zeigt das elektrische Signal sowohl positive als auch negative Amplituden. Im Bereich des Druckbildes sind die Amplituden sehr gering, während sie im Bereich des Sicherheitsfadens sehr hoch sind. Das Verhältnis zwischen hohen und niedrigen Amplituden kann in der Realität noch wesentlich ungünstiger als das hier aus Übersichtlichkeitsgründen dargestellte Verhältnis sein.

Das elektrische Signal S_{B} im Punkt B wird nun zunächst vom Offsetgenerator 50 um zwei Einheiten zu positiven Werten verschoben, so daß der Nullpunkt des Signalbereichs in der Mitte des mittleren Bereichs B₁ der dynamischen Verstärkerstufe 60 liegt. Danach wird das resultierende Signal S_{C} in Punkt C von der dynamischen Verstärkerstufe 60 mit der in Fig. 3 dargestellten Kennlinie verstärkt. Das wiederum daraus resultierende elektrische Signal S_{D} im Punkt D ist in Fig. 4c dargestellt. Die Amplitude des elektrischen Signals S_{D} an Punkt D des Verstärkers 30 ist somit wesentlich gleichmäßiger über den Ausgangsbereich des Verstärkers verteilt als das elektrische Signal S_{B} am Punkt B und der Signalverlauf ist deutlicher zu erkennen.

Das elektrische Signal S_{D} am Punkt D kann nun beispielsweise von einem Analog/Digital-Wandler 80 optimal verarbeitet werden. Bei beispielsweise einem 8-Bit-Analog/Digital-Wandler 80 sind die digitalen Ausgangswerte nun im wesentlichen über den gesamten Wertebereich zwischen 0 und 255 verteilt. Eine direkte Umwandlung des elektrischen Signals S_{C} am Punkt C würde im wesentlichen lediglich einen mittleren Wert sowie die Extremwerte 0 und 255 liefern. Eine Information über den Verlauf des elektrischen Signals S_{C} ginge bei einer solchen Umwandlung verloren.

Die vom Analog/Digital-Wandler 80 erzeugten digitalen Ausgangswerte können dann beispielsweise an eine Meßwertverarbeitungseinrichtung 90 übermittelt werden, die dann beispielsweise die erhaltenen digitalen Werte zur Prüfung des Blattguts mit gespeicherten digitalen Werten vergleicht.

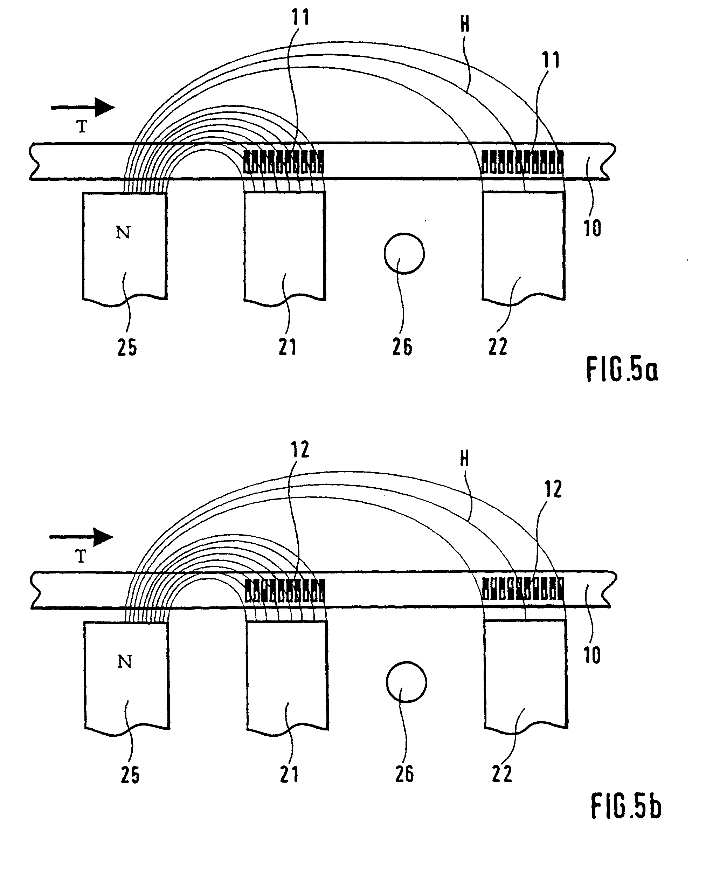

Mit einem Meßkopf 20 gemäß der bevorzugten Ausführungsform der Vorrichtung kann zusätzlich anhand der Symmetrie der elektrischen Signale S_{D} am Punkt D des Verstärkers festgestellt werden, ob es sich bei der Messung um weichmagnetische oder hartmagnetische Partikel handelt. Die Fig. 5 stellt eine Ausschnittsvergrößerung der Fig. 1b dar und zeigt prinzipiell die Messung weichmagnetischer bzw. hartmagnetischer Partikel.

In Fig. 5a befinden sich im Blattgut 10 hartmagnetische Partikel 11. Die hartmagnetischen Partikel 11 sind alle mit dem jeweils weiß dargestellten Südpol in Richtung der Polschuhe 21 und 22 magnetisiert. Die Magnetisierung der hartmagnetischen Partikel kann beispielsweise vor der Messung durch einen hier nicht dargestellten, starken Permanentmagneten oder den Permanentmagneten 25 durchgeführt werden.

Weiterhin ist der Verlauf des magnetischen Feldes H schematisch dargestellt. Die Stärke des magnetischen Feldes H ist proportional zur Dichte der dargestellten Linien. Die Stärke des magnetischen Feldes H ist somit am Permanentmagneten 25 am stärksten. Im Bereich des Polschuhs 21 ist die Stärke des Magnetfeldes H, wie oben beschrieben, gerade so groß, daß der Polschuh 21 einen geeigneten magnetischen Arbeitspunkt aufweist. Im Bereich des Polschuhs 22 ist die Stärke des magnetischen Feldes wesentlich geringer. Die Magnetisierung der hartmagnetischen Partikel bleibt im Bereich der Polschuhe 21 und 22 jedoch durch die lokale Stärke des magnetischen Feldes H im wesentlichen unbeeinflußt.

In Fig. 5b ist die Messung weichmagnetischer Partikel dargestellt. Die Magnetisierung der weichmagnetischen Partikel 12 hängt jedoch von der lokalen Stärke des Magnetfeldes H ab. Im Bereich des Polschuhs 21 ist die Magnetisierung der weichmagnetischen Partikel aufgrund der Anwesenheit eines relativ starken Magnetfelds H stark, während im Bereich des Polschuhs 22 die Magnetisierung der weichmagnetischen Partikel 12 fast vollständig verschwindet, da dort das Magnetfeld H eine wesentlich geringere Stärke aufweist.

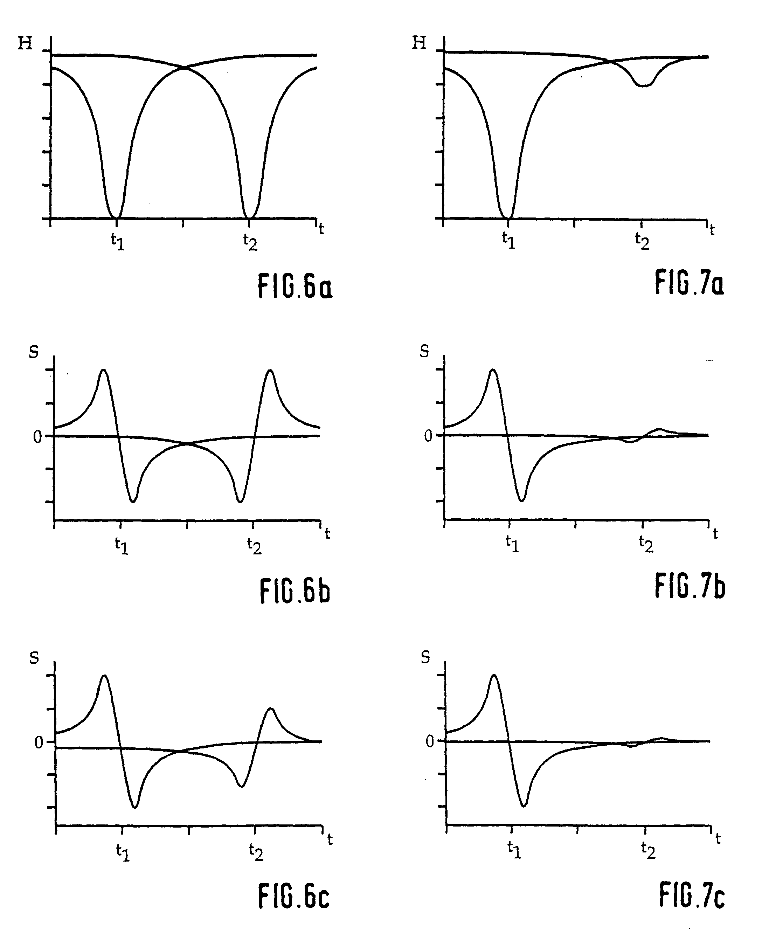

Die Fig. 6 zeigt schematisch die Signalsymmetrie der an den Detektoren 23 und 24 entstehenden elektrischen Signale, wie es von einem schmalen Bereich mit hartmagnetischen Partikeln beim Vorbeitransport des Blattguts 10 erzeugt wird. In Fig. 6a ist die Stärke des Magnetfeldes H gegenüber der Zeit aufgetragen. Zum Zeitpunkt t₁ befindet sich der hartmagnetische Bereich über dem Polschuh 21 und da er entgegengesetzt zum Magnetfeld H magnetisiert ist, wird das Magnetfeld H abgeschwächt. Zum Zeitpunkt t₂ findet dieser Vorgang im Detektor 24 des Polschuhs 22 statt.

Da die Magnetisierung des hartmagnetischen Bereichs während der gesamten Zeit konstant ist, sollte an den Detektoren 23 bzw. 24 bei gleichen Permeabilität µ in den Polschuhen 21 und 22 jeweils ein gleich großes elektrische Signal erzeugt werden, wie in Fig. 6b dargestellt. Die Amplitude des elektrischen Signals S ist hierbei proportional der zeitlichen Veränderung des Magnetfeldes (S ~ µ, dH/dt ). Bei den in Fig. 6b dargestellten Signalen der Detektoren 23 und 24 wurde das elektrische Signal des Detektors 23 aus den oben genannten Gründen zusätzlich invertiert.

Da jedoch die Permeabilität µ von der Stärke des lokalen Magnetfeldes H abhängt ( µ= µ(H)), ist die Permeabilität µ in den Polschuhen 21 und 22 aufgrund der unterschiedlichen lokalen Stärke des Magnetfeldes H verschieden. Lediglich das Material des Polschuhs 21 weist eine optimale Permeabilität µ(H) und somit einen optimalen Arbeitspunkt auf, so daß der Detektor 23 ein elektisches Signal mit einer hohen Amplitude erzeugt. Das am Detektor 24 erzeugte elektrische Signal weist, wie in Fig. 6c gezeigt, eine geringere Amplitude auf.

Die Fig. 7 zeigt die zu Fig. 6 analogen Signalverläufe für einen schmalen Bereich mit weichmagnetischen Partikeln. Da die Magnetisierung des weichmagnetischen Bereichs im Bereich des Polschuhs 22 schon fast vollständig verschwunden ist, ergibt sich, wie in Fig. 7a gezeigt, zum Zeitpunkt t₂ eine wesentlich geringere Änderung des Magnetfelds H und somit auch bei gleicher Permeabilität µ in den Polschuhen 21 und 22 ein wesentlich geringeres elektrisches Signal am Detektor 24 gemäß Fig. 7b.

Aufgrund der oben geschilderten Unterschiede in der Permeabilität µ der beiden Polschuhe 21 und 22 verschwindet das vom Detektor 23 erzeugte und in Fig 7c dargestellte elektrische Signal fast vollständig.

Vergleicht man die in Fig. 6c und 7c dargestellten Signalverläufe, so erkennt man, daß der hartmagnetische Bereich einen wesentlich symmetrischeren Signalverlauf erzeugt als der weichmagnetische Bereich. Aufgrund dieser Symmetrieänderung ist eine von der Intensität des Signals unabhängige Unterscheidungsmöglichkeit gegeben, um hartmagnetische und weichmagnetische Bereiche zu unterscheiden.

Um reproduzierbare Ergebnisse bei der Messung des Blattguts zu gewährleisten, sollten diese möglichst von unerwünschten Änderungen der Verstärkung, wie z. B. durch Temperatureinfluß oder aber auch durch Abnutzung des Meßkopfes, vermieden werden. Zu diesem Zweck ist im Verstärker 30 eine Kalibrierungseinrichtung 70 vorgesehen.

Zur Kalibrierung erzeugt die Kalibrierungseinrichtung 70 ein definiertes elektrisches Signal, das in den Punkten A, B oder C des Verstärkers eingespeist und verstärkt wird. Das elektrische Signal S_{D} am Punkt D wird von der Kalibrierungseinrichtung 70 gemessen und mit in der Kalibrierungseinrichtung 70 gespeicherten Sollwerten verglichen. Anhand dieses Vergleichs wird die Verstärkung der dynamischen Verstärkerstufe 60 so verändert, daß die von der Kalibrierungseinrichtung 70 gemessenen elektrischen Signale S_{D} am Punkt D mit den in der Kalibrierungseinrichtung 70 gespeicherten und mit den von der Kalibrierungseinrichtung 70 erzeugten definierten elektrischen Signalen korrespondierenden Sollwerten übereinstimmen.

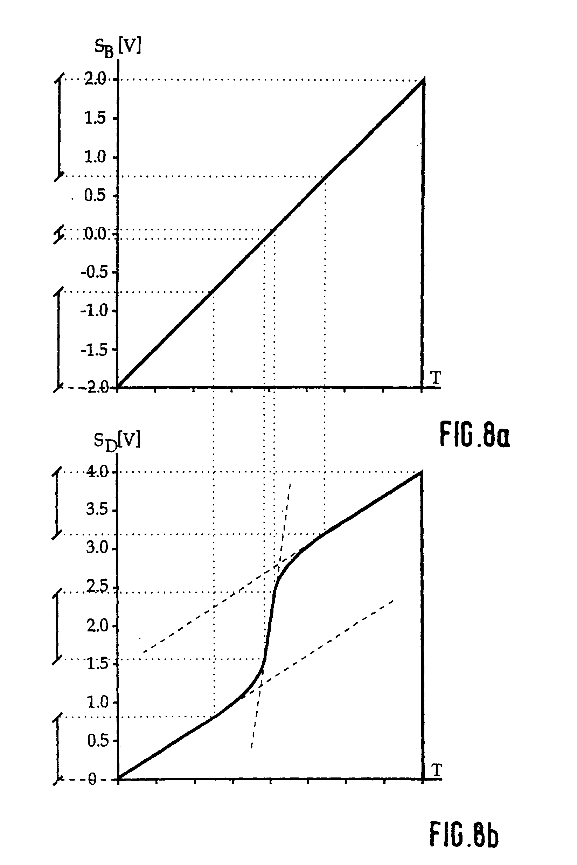

Ein beispielhafter Signalverlauf für ein definiertes elektrisches Signal der Kalibrierungseinrichtung 70 ist in Fig. 8 dargestellt. Vorzugsweise wird von der Kalibrierungseinrichtung 70 ein zeitlich veränderliches, elektrisches Signal erzeugt, das den gesamten Signalbereich abdeckt. Ein Beispiel für ein solches Signal ist in der Fig. 8a über der Zeit dargestellt. Wird dieses elektrische Signal beispielsweise am Punkt B eingespeist, so sollte die Kalibrierungseinrichtung 70 am Punkt D den in Fig. 8b dargestellten elektrischen Signalverlauf S_{D} messen. Entsprechende Abweichungen von den Sollwerten können durch die oben beschriebene Änderung der Verstärkung der Verstärkerstufe 60 kompensiert werden.

Selbstverständlich ist es im Bedarfsfall auch möglich, daß die Kalibrierungseinrichtung 70 die Verschiebung im Offsetgenerator 50 oder die Verstärkung im Vorverstärker 40 verändert. Die Form des von der Kalibrierungseinrichtung 70 erzeugten definierten elektrischen Signals ist in Fig 8a als Sägezahn dargestellt, kann prinzipiell jedoch beliebig gewählt werden.

Eine andere Möglichkeit zur Kalibrierung besteht darin, daß die Kalibrierungseinrichtung 70, wie oben beschrieben, ein definiertes, elektrisches Signal erzeugt und beispielsweise in die Punkte A, B oder C des Verstärkers 30 einspeist. Die vom Verstärker 30 verstärkten und vom Analog/Digital-Wandler 80 umgewandelten digitalen Signale werden dann in der Meßwertverarbeitungseinrichtung 90 auf die erwarteten digitalen Sollwerte normiert. Die dazu notwendigen Normierungskonstanten können beispielsweise als Quotient der erwarteten digitalen Sollwerte und der umgewandelten digitalen Signale berechnet und in entsprechenden Tabellen der Meßwertverarbeitungseinrichtung 90 gespeichert werden.

Durch eine Einspeisung der von der Kalibrierungseinrichtung 70 erzeugten elektrischen Signale an den Punkten A, B oder C des Verstärkers 30 werden lediglich unerwünschte Änderungen in der Verstärkung beseitigt. Um zusätzlich unerwünschte Änderungen, z.B. durch Abnutzungen des Meßkopfs 20, zu beseitigen, erzeugt die Kalibrierungseinrichtung 70 ein definiertes, zeitlich veränderliches, elektrisches Signal, das durch den elektrischen Leiter 26 im Meßspalt M des Meßkopfes 20 geleitet wird. Durch dieses elektrische Signal wird ein definiertes, magnetisches Signal im Meßspalt des Meßkopfes 20 erzeugt. Dieses elektrische Signal kann dann, wie oben beschrieben, entweder durch entsprechende Änderungen im Verstärker 30 oder durch eine Normierung durch die Meßwertverarbeitungseinrichtung 90 auf einen vorgegebenen Sollwert angepaßt werden.

## Patentansprüche

1. Verfahren zur Messung magnetischer Eigenschaften von Blattgut, wie z.B. Banknoten, bei welchem die magnetischen Eigenschaften des Blattguts in elektrische Signale eines bestimmten Signalbereichs umgewandelt werden, **dadurch gekennzeichnet, daß** die elektrischen Signale über eine Kennlinie mit wenigstens zwei Signalbereichen konstanter Verstärkung verstärkt werden, wobei die Verstärkung in einem Bereich für Signale geringer Amplitude größer ist als im angrenzenden Signalbereich.

2. Verfahren nach Anspruch 1, **dadurch gekennzeichnet, daß** die Kennlinie wenigstens drei Signalbereiche konstanter Verstärkung aufweist, wobei die Verstärkung in mindestens einem Signalbereich größer ist als in den jeweils angrenzenden Signalbereichen und die elektrischen Signale vor der Verstärkung um einen konstanten Wert verschoben werden.

3. Verfahren nach Anspruch 1, **dadurch gekennzeichnet, daß** vor der Umwandlung der magnetischen Eigenschaften des Blattguts mindestens die folgenden Schritte zur Kalibrierung der Kennlinie durchgeführt werden:
- Erzeugen eines elektrisches Signals (A, B, C),
- Verstärken dieses elektrischen Signals und
- Änderung der Verstärkung, so daß das elektrische Signal (D) am Verstärkerausgang auf einen bestimmten Wert des Signalbereichs anpaßt wird.

4. Verfahren nach Anspruch 3, **dadurch gekennzeichnet, daß** das elektrische Signal (A, B, C) zeitlich veränderlich ist und den gesamten Signalbereich abdeckt.

5. Verfahren nach Anspruch 1, **dadurch gekennzeichnet, daß** vor der Umwandlung der magnetischen Eigenschaften des Blattguts mindestens die folgenden Schritte zur Kalibrierung der Kennlinie durchgeführt werden:
- Erzeugen eines bestimmten magnetischen Signals (E),
- Umwandeln des magnetischen Signals in ein elektrisches Signal,
- Verstärken des elektrischen Signals und
- Änderung der Verstärkung, so daß das elektrische Signal (D) am Verstärkerausgang auf einen bestimmten Wert des Signalbereichs anpaßt wird.

6. Verfahren nach Anspruch 5, **dadurch gekennzeichnet, daß** das magnetische Signal zeitlich veränderlich ist und das durch Umwandlung erzeugte, zeitlich veränderliche, elektrische Signal den gesamten Signalbereich abdeckt.

7. Verfahren nach einem der Ansprüche 3 bis 6, **dadurch gekennzeichnet, daß** die Änderung der Verstärkung anhand von Tabellen durchgeführt wird.

8. Vorrichtung zur Durchführung des Verfahrens nach Anspruch 1, mit mindestens einem Magnetsensor, wobei
- der Magnetsensor mindestens einen Meßkopf aufweist, mit
- mindestens einem Detektor (23, 24), wobei der Detektor magnetische Signale senkrecht zur Detektorebene in elektrische Signale umwandelt und
- mindestens zwei Polschuhen (21, 22), die so angeordnet sind, daß sie einen Meßspalt bilden und magnetische Signale am Meßspalt senkrecht zur Detektorebene des Detektors (23, 24) übertragen,
- der Magnetsensor mindestens einen Verstärker (30) aufweist, der die elektrischen Signale des Detektors (23, 24) verstärkt,
**dadurch gekennzeichnet, daß**
- die Polschuhe (21, 22) des Meßkopfes magnetisch entkoppelt sind,
- jeder Polschuh (21, 22) einen Detektor (23, 24) aufweist und
- der Meßkopf Mittel (25, 26) zur Erzeugung eines zeitlich konstanten und senkrecht zur Detektorebene eines Detektors (23) stehenden Magnetfeld aufweist, wobei die Stärke des Magnetfeldes an jedem Detektor (23, 24) der Polschuhe unterschiedlich ist.

9. Vorrichtung nach Anspruch 8, **dadurch gekennzeichnet, daß** die Polschuhe weichmagnetisches Material aufweisen.

10. Vorrichtung nach Anspruch 9, **dadurch gekennzeichnet, daß** die Stärke des Magnetfeldes so gewählt wird, daß ein Polschuh einen geeigneten magnetischen Arbeitspunkt aufweist.

11. Vorrichtung nach einem der Ansprüche 8 bis 10, **dadurch gekennzeichnet, daß** mindestens ein Polschuh eine Abschirmung aufweist, so daß die Stärke des Magnetfeldes in diesem Polschuh so gering wie möglich ist.

12. Vorrichtung nach Anspruch 8, **dadurch gekennzeichnet, daß** die Detektoren (23, 24) so miteinander verschaltet sind, daß die elektrischen Signale der einzelnen Detektoren (23, 24) entgegengesetzt gerichtet sind.

13. Vorrichtung nach Anspruch 8, **dadurch gekennzeichnet, daß** die Detektoren (23, 24) jeweils mindestens eine Spule aufweisen.

14. Vorrichtung nach Anspruch 8, **dadurch gekennzeichnet, daß** die Detektoren (23, 24) jeweils mindestens eine Hallsonde aufweisen.

15. Vorrichtung nach Anspruch 8, **dadurch gekennzeichnet, daß** die Detektoren (23, 24) jeweils mindestens einen magnetisch sensitiven Widerstand aufweisen.

16. Vorrichtung nach Anspruch 8, **dadurch gekennzeichnet, daß** die Mittel (25) zur Erzeugung eines zeitlich konstanten Magnetfeldes mindestens einen Permanentmagneten aufweisen.

17. Vorrichtung nach Anspruch 8, **dadurch gekennzeichnet, daß** die Mittel (26) zur Erzeugung eines zeitlich konstanten Magnetfeldes mindestens eine Spule aufweisen.

18. Vorrichtung zur Durchführung des Verfahrens nach Anspruch 6, mit mindestens einem Magnetsensor (10),
- der mindestens einen Detektor (23, 24) aufweist, der magnetische Signale senkrecht zur Detektorebene in elektrische Signale umwandelt,
- der mindestens einen Verstärker (30) aufweist, der die elektrischen Signale des Detektors (23, 24) verstärkt,
- der mindestens zwei Polschuhe (21, 22) aufweist, die so angeordnet sind, daß sie einen Meßspalt bilden und magnetische Signale am Meßspalt senkrecht zur Detektorebene zum Detektor (23, 24) übertragen und
**dadurch gekennzeichnet, daß**
- im Meßspalt des Magnetsensors (10) Mittel zur Erzeugung eines zeitlich veränderlichen, magnetischen Signals vorgesehen ist.

19. Vorrichtung nach Anspruch 18, **dadurch gekennzeichnet, daß** die Mittel zur Erzeugung eines zeitlich veränderlichen, magnetischen Signals einen elektrischen Leiter (26) aufweisen.

20. Vorrichtung nach Anspruch 19, **dadurch gekennzeichnet, daß**
- der Verstärker (30) eine Kalibrierungseinrichtung (70) aufweist, die ein elektrisches Signal (E) erzeugt, das durch den elektrischen Leiter (26) geleitet wird, und
- die Kalibrierungseinrichtung (70) durch Änderung der Verstärkung des Verstärkers (30) das am Verstärkerausgang gemessene elektrische Signal (D) auf einen bestimmten Wert anpaßt.

21. Vorrichtung nach einem der Anspruch 8-20, **dadurch gekennzeichnet, daß** mehrere Magnetköpfe als Array angeordnet werden, wobei die Meßspalten der einzelnen Meßköpfe parallel zueinander ausgerichtet sind.

## Claims

1. A method for measuring magnetic properties of sheet material such as bank notes, wherein the magnetic properties of the sheet material are converted into electric signals of a certain signal range, **characterized in that** the electric signals are amplified via a response curve with at least two signal ranges of constant amplification, the amplification being greater in a range for low-amplitude signals than in the adjoining signal range.

2. The method of claim 1, **characterized in that** the response curve has at least three signal ranges of constant amplification, the amplification being greater in at least one signal range than in the adjoining signal ranges, and the electric signals being shifted by a constant value before amplification.

3. The method of claim 1, **characterized in that** at least the following steps are performed for calibrating the response curve before conversion of the magnetic properties of the sheet material:
- producing an electric signal (A, B, C),
- amplifying this electric signal, and
- varying the amplification so that the electric signal (D) at the amplifier output is adapted to a certain value of the signal range.

4. The method of claim 3, **characterized in that** the electric signal (A, B, C) is time-variant and covers the entire signal range.

5. The method of claim 1, **characterized in that** at least the following steps are performed for calibrating the response curve before conversion of the magnetic properties of the sheet material:
- producing a certain magnetic signal (E),
- converting the magnetic signal into an electric signal,
- amplifying the electric signal, and
- varying the amplification so that the electric signal (D) at the amplifier output is adapted to a certain value of the signal range.

6. The method of claim 5, **characterized in that** the magnetic signal is time-variant and the time-variant, electric signal produced by conversion covers the entire signal range.

7. The method of any of claims 3 to 6, **characterized in that** the variation of amplification is performed using tables.

8. An apparatus for carrying out the method of claim 1, having at least one magnetic sensor,
- the magnetic sensor having at least one measuring head, with
- at least one detector (23, 24), the detector converting magnetic signals perpendicular to the detector plane into electric signals, and
- at least two pole shoes (21, 22) disposed so as to form a measuring gap and transfer magnetic signals at the measuring gap perpendicular to the detector plane of the detector (23, 24),
- the magnetic sensor having at least one amplifier (30) for amplifying the electric signals from the detector (23, 24),
**characterized in that**
- the pole shoes (21, 22) of the measuring head are magnetically decoupled,
- each pole shoe (21, 22) has a detector (23, 24), and
- the measuring head has means (25, 26) for producing a time-invariant magnetic field perpendicular to the detector plane of a detector (23), the strength of the magnetic field being different at each detector (23, 24) of the pole shoes.

9. The apparatus of claim 8, **characterized in that** the pole shoes have soft magnetic material.

10. The apparatus of claim 9, **characterized in that** the strength of the magnetic field is selected so that one pole shoe has a suitable magnetic operating point.

11. The apparatus of any of claims 8 to 10, **characterized in that** at least one pole shoe has a screen so that the strength of the magnetic field is as low as possible in this pole shoe.

12. The apparatus of claim 8, **characterized in that** the detectors (23, 24) are wired together so that the electric signals of the individual detectors (23, 24) are inverse.

13. The apparatus of claim 8, **characterized in that** the detectors (23, 24) each have at least one coil.

14. The apparatus of claim 8, **characterized in that** the detectors (23, 24) each have at least one Hall probe.

15. The apparatus of claim 8, **characterized in that** the detectors (23, 24) each have at least one magnetically sensitive resistor.

16. The apparatus of claim 8, **characterized in that** the means (25) for producing a time-invariant magnetic field have at least one permanent magnet.

17. The apparatus of claim 8, **characterized in that** the means (26) for producing a time-invariant magnetic field have at least one coil.

18. An apparatus for carrying out the method of claim 6, having at least one magnetic sensor (10), the magnetic sensor having
- at least one detector (23, 24) for converting magnetic signals perpendicular to the detector plane into electric signals,
- at least one amplifier (30) for amplifying the electric signals from the detector (23, 24),
- at least two pole shoes (21, 22) disposed so as to form a measuring gap and transfer magnetic signals at the measuring gap perpendicular to the detector plane to the detector (23, 24),
**characterized in that**
- means are provided in the measuring gap of the magnetic sensor (10) for producing a time-variant, magnetic signal.

19. The apparatus of claim 18, **characterized in that** the means for producing a time-variant, magnetic signal have an electric conductor (26).

20. The apparatus of claim 19, **characterized in that**
- the amplifier (30) has a calibration device (70) for producing an electric signal (E) which is conducted through the electric conductor (26), and
- the calibration device (70) adapts the electric signal (D) measured at the amplifier output to a certain value by varying the amplification of the amplifier (30).

21. The apparatus of any of claims 8 to 20, **characterized in that** a plurality of magnetic heads are disposed as an array, the measuring gaps of the individual measuring heads being aligned parallel to each other.

## Revendications

1. Procédé pour mesurer des propriétés magnétiques de matériaux sous forme de feuille, comme des billets de banque, avec lequel les propriétés magnétiques du matériau sous forme de feuille sont converties en des signaux électriques d'une certaine plage de signal, **caractérisé en ce que** les signaux électriques sont amplifiés avec un gain constant le long d'une caractéristique ayant au moins deux plages de signal, le gain dans une plage pour signaux de faible amplitude étant supérieur à celui dans la plage de signal contiguë.

2. Procédé selon la revendication 1, **caractérisé en ce que** la caractéristique présente au moins trois plages de signal de gain constant, le gain dans au moins une plage de signal étant supérieur aux gains dans chaque plage de signal contiguë et les signaux électriques avant l'amplification étant décalés d'une valeur constante.

3. Procédé selon la revendication 1, **caractérisé en ce que**, avant la conversion des propriétés magnétiques du matériau en forme de feuille, sont exécutées au moins les étapes suivantes afin de calibrer la caractéristique
- génération d'un signal électrique (A, B, C),
- amplification de ce signal électrique et
- modification du gain de manière que le signal électrique (D) en sortie de l'amplificateur soit réglé sur une certaine valeur de la plage de signal.

4. Procédé selon la revendication 3, **caractérisé en ce que** le signal électrique (A, B, C) est modifiable dans le temps et couvre toute la plage de signal.

5. Procédé selon la revendication 1, **caractérisé en ce que**, avant la conversion des propriétés magnétiques du matériau en forme de feuille, sont exécutées au moins les étapes suivantes afin de calibrer la caractéristique
- génération d'un certain signal magnétique (E),
- conversion du signal magnétique en un signal électrique,
- amplification du signal électrique et
- modification du gain de manière que le signal électrique (D) en sortie de l'amplificateur soit réglé sur une certaine valeur de la plage de signal.

6. Procédé selon la revendication 5, **caractérisé en ce que** le signal magnétique est modifiable dans le temps et que le signal électrique, modifiable dans le temps et généré par la conversion, couvre toute la plage de signal.

7. Procédé selon une des revendications 3 à 6, **caractérisé en ce que** la modification du gain est réalisée à l'aide de tables.

8. Dispositif destiné à exécuter le procédé selon la revendication 1, avec au moins un capteur magnétique, dans lequel
- le capteur magnétique présente au moins une tête de mesure, avec
- au moins un détecteur (23, 24), lequel détecteur convertit des signaux magnétiques perpendiculairement au plan de détection en des signaux électriques et
- au moins deux pièces polaires (21, 22) qui sont agencées de manière qu'elles forment un intervalle de mesure et qu'elle transmettent des signaux magnétiques au niveau de l'intervalle de mesure perpendiculairement au plan de détection du détecteur (23, 24),
- le capteur magnétique présente au moins un amplificateur (30) qui amplifie les signaux électriques du détecteur (23, 24),
**caractérisé en ce que**
- les pièces polaires (21, 22) de la tête de mesure sont couplées de manière magnétique,
- chaque pièce polaire (21, 22) présente un détecteur (23, 24) et
- la tête de mesure présente des moyens (25, 26) pour générer un champ magnétique constant dans le temps et étant perpendiculaire au plan de détection d'un détecteur (23), l'intensité du champ magnétique au niveau de chaque détecteur (23, 24) des pièces polaires étant différente.

9. Dispositif selon la revendication 8, **caractérisé en ce que** les pièces polaires sont constituées d'un matériau magnétique doux.

10. Dispositif selon la revendication 9, **caractérisé en ce que** l'intensité du champ magnétique est choisie de manière qu'une pièce polaire présente un point de fonctionnement magnétique approprié.

11. Dispositif selon une des revendications 8 à 10, **caractérisé en ce qu'**au moins une pièce polaire présente un blindage de manière que l'intensité du champ magnétique soit aussi faible que possible dans cette pièce polaire.

12. Dispositif selon la revendication 8, **caractérisé en ce que** les détecteurs (23, 24) sont câblés entre eux de manière que les signaux électriques des différents détecteurs (23, 24) soient orientés dans des directions opposées.

13. Dispositif selon la revendication 8, **caractérisé en ce que** les détecteurs (23, 24) présentent chacun au moins une bobine.

14. Dispositif selon la revendication 8, **caractérisé en ce que** les détecteurs (23, 24) présentent chacun au moins une sonde de Hall.

15. Dispositif selon la revendication 8, **caractérisé en ce que** les détecteurs (23, 24) présentent chacun au moins une résistance sensible aux effets magnétiques.

16. Dispositif selon la revendication 8, **caractérisé en ce que** les moyens (25) destinés à générer un champ magnétique constant dans le temps présentent au moins un aimant permanent.

17. Dispositif selon la revendication 8, **caractérisé en ce que** les moyens (26) pour générer un champ magnétique constant dans le temps présentent au moins une bobine.

18. Dispositif destiné à exécuter le procédé selon la revendication 6, avec au moins un capteur magnétique (10),
- qui présente au moins un détecteur (23, 24) qui convertit des signaux magnétiques perpendiculairement au plan de détection en des signaux électriques,
- qui présente au moins un amplificateur (30) qui amplifie les signaux électriques du détecteur (23, 24),
- qui présente au moins deux pièces polaires (21, 22) qui sont agencées de manière qu'elles forment un intervalle de mesure et qu'elles transmettent des signaux magnétiques au niveau de l'intervalle de mesure perpendiculairement au plan de détection du détecteur (23, 24) et
**caractérisé en ce que**
- il est prévu dans l'intervalle de mesure du capteur magnétique (10) des moyens destinés à générer un signal magnétique modifiable dans le temps.

19. Dispositif selon la revendication 18, **caractérisé en ce que** les moyens destinés à générer un signal magnétique modifiable dans le temps présentent un conducteur électrique (26).

20. Dispositif selon la revendication 19, **caractérisé en ce que**
- l'amplificateur (30) présente un dispositif de calibrage (70) qui génère un signal électrique (E) qui est guidé à travers le conducteur électrique (26), et
- que le dispositif de calibrage (70) règle le signal électrique (D) mesuré en sortie de l'amplificateur sur une certaine valeur en modifiant le gain de l'amplificateur (30).

21. Dispositif selon une des revendications 8 à 20, **caractérisé en ce que** plusieurs têtes de mesure sont placées pour former un arrangement tel que les intervalles de mesure des différentes têtes de mesure soient disposés parallèles l'un à l'autre.
